Europäisches Patentamt

European Patent Office

Office européen des brevets

(19)

(11) Publication number: **0 136 852**
A2

(12) **EUROPEAN PATENT APPLICATION**

(21) Application number: 84306130.0

(22) Date of filing: 07.09.84

(51) Int. Cl.⁴: **H 01 R 43/05**

(30) Priority: 30.09.83 GB 8326251

(43) Date of publication of application:
10.04.85 Bulletin 85/15

(84) Designated Contracting States:
BE DE FR GB IT NL

(71) Applicant: AMP INCORPORATED
P.O. Box 3608 449 Eisenhower Boulevard
Harrisburg Pennsylvania 17105(US)

(72) Inventor: Knapp, Horst
22 Schillerstrasse
D-6112 Gross Zimmern(DE)

(72) Inventor: Liedloff, Manfred
33 Rheingavstrasse
D-6110 Dieburg(DE)

(72) Inventor: Gerst, Michael
Amkirschberg 24
D-6520 Worms 24(DE)

(72) Inventor: Maack, Werner
Im Gueldenen Wingert 4
D-6104 Seeheim(DE)

(74) Representative: Gray, Robin Oliver et al,
BARON & WARREN 18 South End Kensington
London W8 5BU(GB)

(54) Multiple wire stripper and wire locating means therefor.

(57) The multiple wire stripper comprises a plurality of pairs of stripper blades (6) which are mounted adjacent to wire gripping blocks (10, 11) which in turn are mounted to wire straightening device (3, 80, 83). Wires (9) are presented to the wire stripper by a wire carrier (8) and positioned between the open straightening blocks (80, 83), the gripping blocks (10, 11) and the blades (6). The straightening blocks are closed to precisely position the wires between the blocks (10, 11) and blades (6). Thereafter the blocks (10, 11) are moved towards each other to grip the wires, the blades (6) are moved towards each other to circumferentially cut the wire insulation, and the blades (6) are moved away from the blocks (10, 11) to strip the insulation.

./...

EP 0 136 852 A2

FIG.3.

## MULTIPLE WIRE STRIPPER AND WIRE LOCATING MEANS THEREFOR

This invention relates to a multiple wire stripper.

Wire stripping devices are known in which a wire to be stripped is gripped between gripping jaws and stripping blades are then closed about the wire adjacent the jaws and moved away from the jaws to strip the insulation from an end portion of the wire. Such devices are used for successively stripping individual wires which may then be terminated and then bundled together to form a harness.

In recent years there has been a trend to the use of harnesses in which the wires of a group are terminated in a connector, and with the use of slotted plate terminations it has proved advantageous to mass terminate the group of wires simultaneously in the connector. To this end several wires are fed as a group simultaneously from respective sources in spaced parallel relation at a pitch corresponding to that of the connector terminals, lengths of wire are severed and the group is mass-terminated at one, or both ends. In practice it is often desirable to terminate the wires of the group at one end with different terminals by conventional crimping and to this end the wires need to be stripped of insulation. The handling of individual wires in a stripper device is inconvenient, and further the identification of the wires because of their association with specific terminals of a connector at the other end of the group of wires, is important.

It has been proposed in AMP Incorporated European Patent Application 80302224.3 Publication No. 0022637A1, to provide harness making apparatus adapted to mass terminate a group of spaced parallel wires at one end in a slotted plate connector and to sever the wires of the group at a wire severing and stripping station disposed between the connector and sources of wire supply. The severed ends of the wires are pulled between opposed stripping blades to effect stripping of end portions.

It is an object of the invention to provide a multiple wire stripper in which a group of wires arranged in spaced parallel relation may be stripped simultaneously.

A multiple wire stripper according to the invention comprises a frame carrying a pair of opposed stripping blades adapted to engage a plurality of wires arranged in spaced parallel relation and to strip end portions of the wires by relative movement between the stripper blades and the wires lengthwise of the wires, driving means being adapted to move the blades between open and closed conditions, and is characterized in that the stripper blades are supported on respective stripper blocks, the blocks being mounted on transverse guides extending from respective stripper support blocks for movement of the stripper blocks towards and away from the support blocks, the support blocks being mounted in the frame on guide means for movement towards and away from each other to effect opening and closing of the stripper blocks and the stripper blades, biasing means acting between the support blocks and the stripper blocks to bias the stripper blocks away from the support blocks, a pair of wire gripper blocks being reciprocably mounted in the frame adjacent the stripper blocks on a side opposite to the support blocks and adapted to clamp the plurality of wires adjacent end portions to be stripped, the drive means being arranged to move the gripper blocks and the stripper support blocks between open and closed conditions, a carriage drive means being mounted in the frame for reciprocation transversely of the paths of movement of the gripper blocks and support blocks and means on the carriage being arranged to engage the stripper blocks on movement of the carriage in one sense to drive the stripper blocks against their biasing means on the transverse guides towards the support blocks and away from the gripper blocks to effect a stripping action.

The invention also includes wire locating means which are suitably mounted adjacent the gripper blocks on a side opposite the stripper blades and comprising a fixed lower support block and a movable wire straightening block reciprocably mounted for movement inwardly and away from the support block at an acute angle in relation to the wire insertion direction, the wire straightening block being formed at a lower leading portion with a plurality of plate portions slidably engageable in respective slots formed in the support block, spaces between the plate portions defining wire guide passages, the straightening block being reciprocable between a condition in which the plate portions are withdrawn from the slots, and a condition in which they penetrate the slots and a leading side slidingly abuts a gripper block.

Driving means for the gripper blocks and for the stripper support block suitably comprise respective drive rods engageable by cam means on the carriage to drive the rods downwardly, the rods being directly coupled to upper blocks and coupled to lower blocks, through reversing linkages, whereby the blocks may be moved together.

Biasing means are suitably provided between the gripper blocks and between the stripper support blocks respectively to bias the blocks apart to open conditions.

Drive rods for the stripper support blocks are suitably arranged to engage the associated cam means of the carriage through respective links pivoted on the drive rods and biased to an operative condition, adjustable means on the carriage being arranged on movement in a stripping direction pivotally to move the links to an inoperative condition disengaged from the cam and allowing opening of the stripper support blocks by the associated biasing means.

Advantageously the stripper blocks are each formed as a series of plate members each carrying a respective adjustable stripper blade and mounted on a respective transverse guide extending from the associated stripper support block, the plate members of each block being disposed in side-by-side sliding engagement whereby the plate members are independently movable towards and away from the associated support blocks. Suitably the guides comprise rods secured to the plates and extending slidably through bores in the support blocks and carrying adjustable collars at their ends on a side of the associated support block remote from the stripper block, compression springs being mounted on the rods between the support blocks and the plate members of the stripper blocks.

The means on the carriage arranged to engage the stripper blocks suitably comprise respective rows of studs, each being arranged to engage a respective plate member and being individually adjustable in the direction of carriage movement.

Suitably the plate members of one stripper block are coupled to respective plate members of the other block by sliding guides.

Preferably one of the gripper blocks comprises a series of spring-loaded gripper members biased towards the other gripper block and each arranged to engage a respective wire. The spring loading facilitates the accommodation of different wire diameters.

Suitably the stripper blocks on a side of the stripper blades remote from the gripper blocks are formed with recesses arranged on closure of the stripper blades to define a generally rectangular cavity at a side of the stripper blades and open at opposite ends of the blocks, the cavity being arranged on movement of the stripper blocks towards the stripper support blocks to align with a vacuum duct, supported by the frame, for removal of stripped insulation.

Figure 1 is a front elevation of a multiple wire stripping unit with at the left hand of the center line 3-3, part of the casing removed to expose wire gripping means and operating mechanism therefor, and at the right of the center line, shown in section behind the wire gripping mechanism to expose wire stripping blades and operating mechanism therefor.

Figure 1A is a fragmentary view to an enlarged scale of a central portion of Figure 1.

Figure 2 is a section taken on line 2-2 of Figure 1 to an enlarged scale of part of the operating means for the shear mechanism.

Figure 3 is a section taken on the line 3-3 of Figure 1 and additionally showing wire straightening means mounted at the left hand of the apparatus and in phantom a multiple wire carrier device in two positions of operation.

Figure 4 is a fragmentary section taken on line 4-4 of Figure 3.

Figure 5 is a plan view of the apparatus of Figure 1 with at the left hand, parts of the casing removed and partly sectioned to expose operating parts, and at the right hand with the casing and operating mechanism removed to expose operating means for the wire gripping and wire stripping blades.

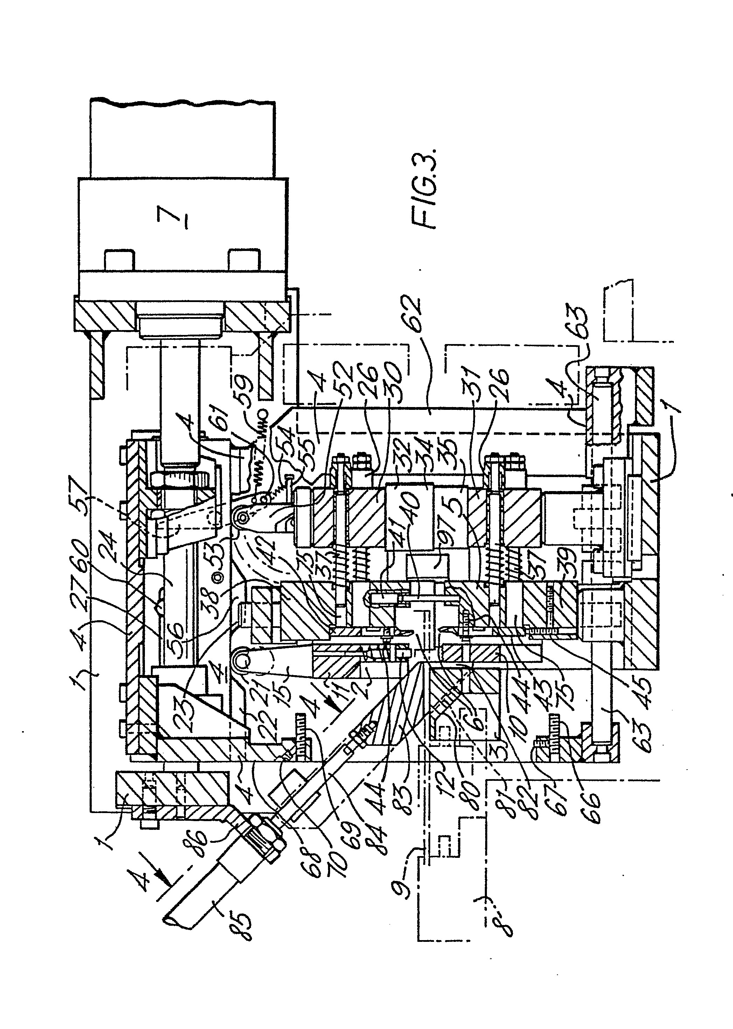

The wire stripping apparatus comprises a box-like framework 1, open at a forward side, the left as seen in Figure 3, to expose wire grippers 2 mounted for vertical reciprocation in opposite directions within the casing on the framework 1, forwardly of the grippers 2. A carriage 4 is mounted within the box-like framework 1 for forward and rearward reciprocation on guide rods and carries wire stripping means 5 comprising opposed stripping blades 6 arranged for vertical reciprocation in opposite directions. A piston and cylinder device 7 is mounted at a rear of the framework 1 and is coupled to the carriage 4 to drive the carriage 4 backwards and forwards. A multiple wire carrier 8 shown in phantom, is mounted forwardly of the wire straightening means 3 and is arranged for reciprocation towards and away from the means 3 to position wires 9 between the grippers 2 and stripping blades 6.

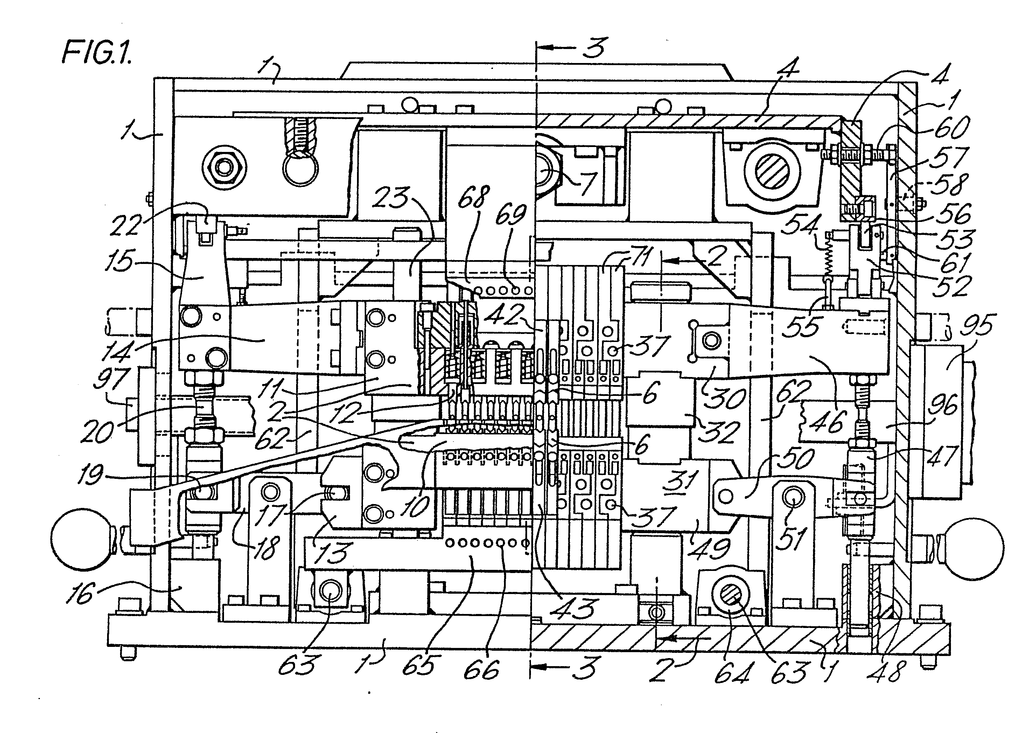

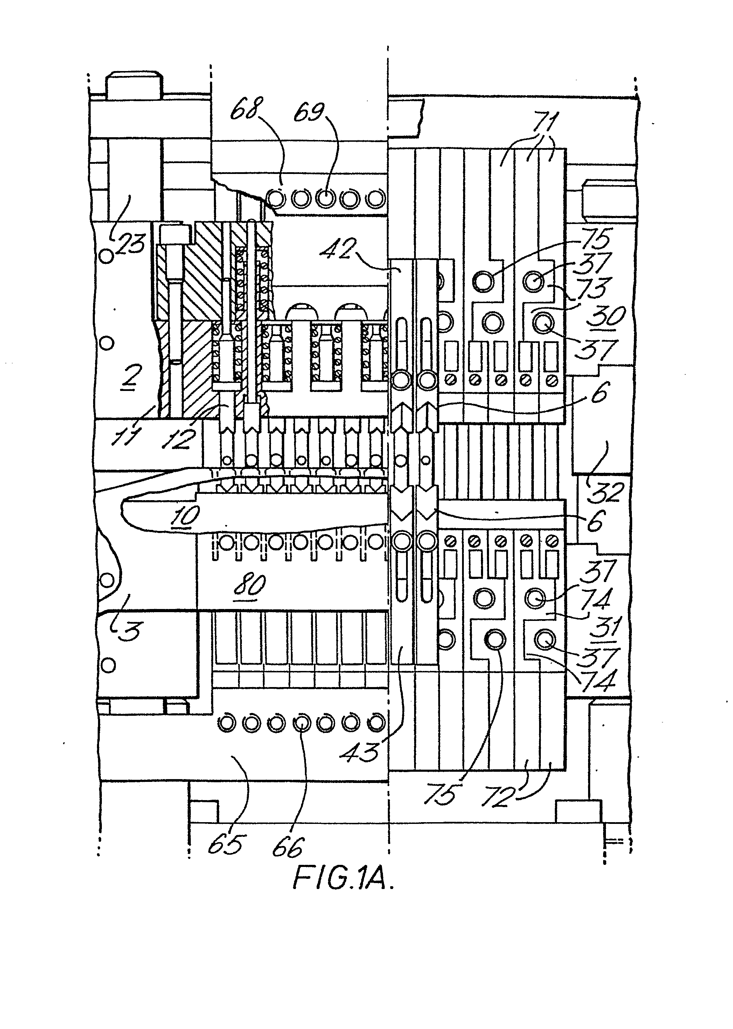

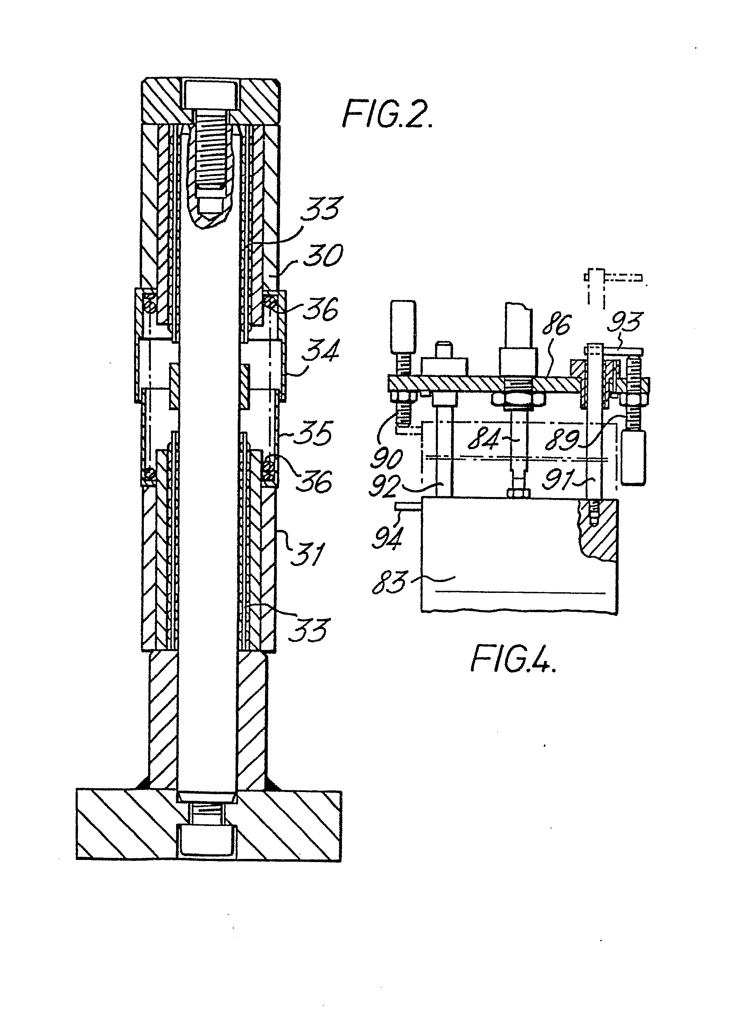

The wire grippers 2 comprise a lower gripping block 10 formed with an upper gripping surface extending across the full width of the wire stripping zone as seen in Figure 1, and an upper gripping block 11 carrying a row of fourteen gripping members 12, spring loaded in the block 11 and biased downwardly to project below the block 12 towards the gripping surface of block 10. The blocks 10 and 11 are formed with lateral extensions 13, 14 at opposite sides as seen in Figure 1, the extension 13 being relatively short, whereas extensions 14 approach opposite sides of the framework. It will be understood that only the left hand extensions 13, 14 are shown in Figure 1.

The outer ends of the extensions 14 are secured to respective upright drive members 15 extending vertically and supported at their lower ends in bushings 16 for vertical reciprocation. Outer ends of the extensions 13 are pivotally coupled by pin and slot connections 17 to ends of respective reversing links 18 similarly connected at their other ends by pin and slot couplings 19 to drive members 15. The reversing links are pivotally supported at their middle points on pivots 20 supported on the framework 1. Intermediate the coupling 19 and the connection with extension 14, each drive member is provided with length adjustment means 20 for setting the spacing of the gripper blocks 10 and 11. Upper ends of the drive members 15 above the extensions 14 support rollers 21 engaged with respective cams 22 formed on sides of the carriage 4 arranged for driving members 15 downwards.

The blocks 10 and 11 are guided in vertical movement on a pair of upright shafts 23 supported at the base of the support frame 1, one at each side and extending through ball bearing apertures in the blocks and carrying, between the blocks, spring biasing means for biasing the blocks 10 and 11 apart. The shafts 23 bearings and biasing means are arranged generally as described below in relation to Figure 2 which discloses corresponding means for the stripping means 5.

The wire stripping means 5 comprise upper and lower support blocks 30, 31 guided for up and down movement on a pair of spaced guide shafts 32, one at each side as seen in Figure 1, one only being shown. The guide shafts 32 are as shown to enlarged scale in Figure 2 and each comprises a rod supported at its lower end in the base of the framework 1 and extending through bores in the blocks 30, 31 at which ball bearings 33 are mounted. Telescoping sleeves 34, 35 are mounted on the rod between the blocks 30, 31 and are biased apart by compression spring 36, the lower block 31 engaging a support bush extending from the base of the framework 1 and the upper block 30 engaging a boss secured to the upper end of the rod, the biasing spring 36 serving to bias the blocks 30, 31 apart.

A series of guide rods 37 are mounted at their forward ends in the blocks 38, 39 and extend rearwardly into horizontal bores formed in upper and lower stripper support blocks 30, 31. Compression springs are disposed on the rods 37 between blocks 30, 38 and 31, 39 to bias the blocks 38, 39 forwardly to engage forward stops, defined by collars 26 adjustably mounted at the rear of the rods 37, against the rear of the stripper support blocks 30, 31. The forward stops 26 comprise collars threadably mounted on the rods 37 and secured by lock nuts to the position of Figure 3. A row of vertical guide pins 40 is mounted in the upper side of block 39 and registering with a row of corresponding upright bores 41 in the lower side of the upper block 38 to guide the blocks 38, 39 in relative movement towards and away from each other.

Each of the blocks 38, 39 carries on its front face a row of fourteen stripper blades 42, 43 having notched tips as seen in Figure 1 and arranged to come together, as evident from Figure 3 in overlapping relation with the lower blades rearwardly of the upper blades, on movement of blocks 38, 39 together. The blades are individually mounted by clamping screws 44 extending rearwardly through upright slots in the blades into the blocks, so that the blades may be individually set in position. Additionally the lower blades are vertically adjustable by means of basal set screws 45.

The upper support block 30 is formed, as seen in Figure 1 with lateral extensions 46 at opposite sides, extending to sides of the framework 1 at which are disposed upright drive members 47 supported at their lower ends in bushings 48 mounted in the base of the framework 1 and arranged for up and down movement of the members 47 in the bushings. The extensions 46 at their outer ends, are secured to respective drive members 47. The lower support block 31 is also provided at opposite sides with lateral extensions 49 which are short relative to extensions 46, and at their ends coupled by pin and slot connection to ends of respective reversing links 50. The other ends of the links 50 are coupled in similar manner to respective driving members 47 and at central pivots 51 are pivotally supported on the base of the framework 1.

Above the extensions 46, each drive member 47 is pivotally connected to a link 52 which at its upper end carries a roller 53. As seen in Figure 3 the pivotal coupling is adapted to limit clockwise movement of the link 52 to the upright condition shown, and to which it is biased by a tension spring 54 extending from the upper end of the link 52 downwardly and rearwardly to an arm 55 secured to the framework 1. Each roller 53 is arranged in the path of a respective cam 56 formed on a side member of the carriage 4 rearwardly of the corresponding cam 22, and the cams 56 are arranged on rearward movement of the carriage 4 to engage the rollers 53 and deflect the links 52 and driving members 47 downwards.

Trip levers 57 are pivotally mounted to the framework 1 adjacent respective links 52 at pivots 58 disposed above the links 52 at mid-points of the levers which extend at an upward and forward inclination as seen in Figure 3 to which they are biased by respective tension springs 59 extending between lower ends of the levers and the framework 1. Upper ends of the levers 57 are arranged rearwardly of the heads of studs 60 secured to side members of the carriage 4, in slots 27 and arranged on rearward movement of the carriage 4 to engage the upper ends of the levers and rotate them clockwise as seen in Figure 3. At their lower ends the levers 57 are formed with inwardly directed pins 61 extending behind respective links 52, and arranged on clockwise movement of the levers 57 to engage the links 52 and pivot them counterclockwise from their Figure 3 condition.

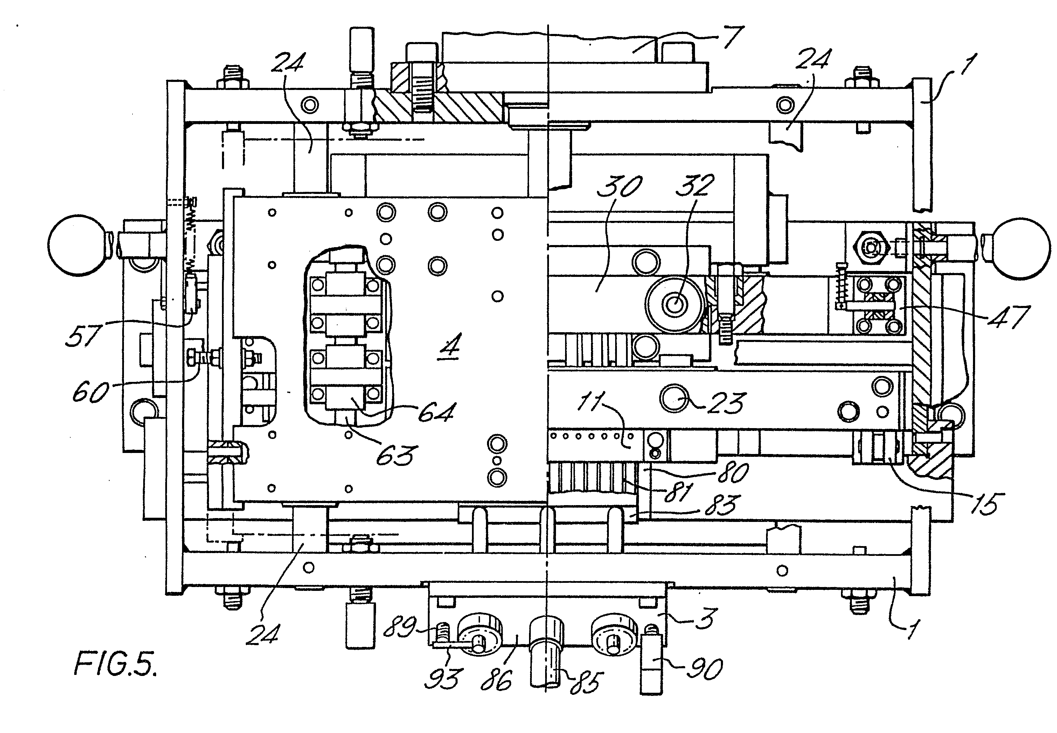

Rearwardly of the stripper support blocks 30, 31 and guide shafts 32, the carriage 4 is formed at opposite sides with dependent portions 62 which at lower ends, are secured to the rear ends of respective pull-rods 63 slidable in bushings 64 mounted in the base of the framework 1. The rods 63 project forwardly from the framework 1, as seen in Figure 4 and at their forward ends are secured to opposite sides of a cross member 65 spaced from and generally opposed to the lower stripper block 39. The cross member 65 supports a row of fourteen studs 66 projecting rearwardly towards the block 39 and each associated with a respective stripper blade 42. The studs 66 are adjustable in respective bores of the member 65 and can be secured by respective set screws 67.

An upper forward end of the carriage 4 presents an upper cross member 68, vertically aligned with the member 65 as seen in Figure 3 and similarly formed with a row of fourteen studs 69 secured by set screws 70 and extending rearwardly towards the upper stripper block 38. The studs 69 are associated with respective stripper blades 42.

The stripper blocks 38 and 39 are each formed of a series of upright plate members 71, 72 as seen in Figure 1, alternate members having thicker portions 73, 74 projecting on respective opposite sides and staggered vertically. Adjacent each thicker portion there is a complementary recess, the adjacent plate members being arranged in overlapping relation and slidably engaging the complementary recesses. Horizontal bores 75 are formed through respective thick portions 73, 74 for receiving respective guide rods 37, which are secured to the plate members. The plate members 71, 72 are thus independently slidable backwards and forwards on the rods 37 by sliding of the rods 37 in the support blocks 30, 31.

The wire straightening device 3 comprises a lower wire support block 80, Figure 3, formed centrally of a cross-member 81 secured at opposite sides to the framework 1, Figure 1. The support block 80 has an upper flat surface extending across the width of the stripping zone at a level midway between the stripping blades 43, 44 when in the open condition of Figure 3. A rear face of the support block 80 is spaced a short distance from the lower gripping member 11. The rear face and upper surface together define a right angled upper-rear corner to the block and a series of slots 81 traverses this corner, the slots being spaced at intervals corresponding to spaces between adjacent stripper blades. The slots 81 are of triangular form having bases inclined at forty-five degrees to the upper surface and rear side and are adapted to receive corresponding plate portions 82 of a complementary upper straightening block 83. The block 83 is substantially a parallelogram in cross section, as seen in Figure 3, with upright forward and rearward surfaces and upper and lower surfaces inclined upwardly and forwardly at forty-five degrees. The block is secured to an operating rod 84 of a piston and cylinder device 85 supported on a bracket 86 from an upper forward position of the framework 1, and arranged to drive the block 83 towards and away from the block 80 along a path inclined at forty-five degrees. The block 83 is formed at its lower forward corner with a series of slots at positions corresponding to those of the stripper blades 42, bases of the slots extending horizontally to define between adjacent slots triangular plate portions 82 at locations corresponding to the slots 81 in respective ones of which they are a sliding fit. The rear face of the block 83 is arranged on forward and downward movement to the condition of Figure 3, to abut the forward face of the lower gripper block 10 in a sliding contact and to define between the bases of its slots and the upper surface of the block 80 a series of wire passageways 88 separated by plate portions 82.

As seen in Figure 4 the bracket 86 supports adjustable stop means 89, 90 arranged to limit traverse of the block 83. The block carries a pair of guide rods 91, 92, the rod 91 extending through a bearing in the bracket 86 and on the opposite side having a transverse stop pin 93 arranged to engage stop means 89 on rearward movement i.e. to the right. The block 83 carries a transverse stop pin 94 arranged on movement of the block in the opposite direction to engage stop means 92.

Referring now to Figure 1, a vacuum device 95 is mounted at the right hand side of the framework 1, and communicates with a duct 96 leading inwardly to a location at a side of the stripping zone. A complementary duct 97 leads from the opposite side of the framework and which leads inwardly to the opposite side of the stripping zone. As seen in Figure 3, the ducts, of which 97 is seen, are disposed forwardly of the stripper support blocks 31, and rearwardly of the stripper blocks 38, 39. The facing surfaces of the blocks 38, 39 are stepped to define, when the blocks are moved together, and with engagement of the stripper blades 42, 43, a box-like chamber which, as the blocks 38, 39 are withdrawn rearwardly, aligns with the ducts 97. In use it is necessary to set up the machine in relation to the wires to be handled to obtain proper stripping of the insulation over the desired length of wire.

The stripped length may be determined by adjustment of the stop collars 26 at the rear of the stripper guide rods 37 which adjusts the forward positions of the different shear blades 6, and by adjusting the studs 66, 69 in the lower and upper cross members 65, 68 of the carriage 4 which together determine the forward positions and maximum rearward movement of the shear blades 6. Also, by adjustment of the studs 60 at opposite sides of the carriage 4, in slots 27 formed in the carriage side members, the position in the stripping stroke, i.e. rearward movement of the stripper blocks 38, 39, at which the levers 57 trip the links 52 to disengage the drive members 47 and allow separation of the shear blocks 38, 39 under the influence of bias of the guide shaft 32, the length of the shear stroke can be foreshortened by opening of the shear blades before rearward movement of the shear blocks is complete.

The position of the lower gripper block 10 of the wire gripper 2 is set by adjustment of the length adjusting devices 20 of drive members 15 so that on closing of the gripper blocks 10, 11 together, the upper surface of the lower wire support block 80 is at the level of inter-engagement of the complementary upper and lower stripper blades 42, 43. The blades 42, 43 are individually set, vertically to obtain stripping of the appropriate wire at each complementary pair of blades 42, 43.

The forward and rearward stops 89, 90 of the wire straightening device 3 are set to ensure that the rearward sides of plate portions 82 slidably engage the forward face of lower gripper block 10 on rearward movement, and on forward movement the plate portions 82 clear the complementary slots in block 80 of the wire straightening device 3.

With the apparatus in the condition of Figure 4, the wire straightening block 83 is withdrawn forwardly and upwardly to admit insertion of a group of parallel wires 9 over the wire support block 80. The multiple wire carrier 8 is suitably displaced laterally from the left position shown to the right to the position shown fragmentarily, so that the wire ends extend past the stripping blades 6. The wire straightening block 83 is then moved downwardly and rearwardly, the plate portions 82 engaging between adjacent wires and entering slots 81, the leading edges of the plate portions 82 moving lengthwise of the wires so that the plate portions 82 exert a straightening action on the wires 9 and hold them in appropriate spaced relation with reference to the shear blades 6.

When the block 83 reaches the rearward position shown in Figure 3, the piston and cylinder device 7 is operated to draw the carriage 4 rearwardly i.e. to the right. The cam 22 engages rollers 21 on respective drive members 15 to depress the drive members. The upper gripper block 11 is lowered and the lower gripper block 10 is elevated via the reversing links 18, to the level of the upper surface of the wire support block 80. The spring loaded grippers 12 engage respective wires 9 and clamp them against the lower gripper block 10 to secure the wires 9 against axial movement under the subsequent stripping action.

The cams 56 subsequently engage rollers 53 of drive members 47 to close the stripper support blocks 30, 31 together, to engage stripper blades 42, 43 with respective wires 9.

As the gripper blocks 10, 11 and stripper blocks 30, 31 are moved together it will be understood that guide shafts 23, 32 are telescopically compressed about their biasing springs. When the stripper blades 42, 43 are closed, further rearward movement of the carriage 4 effects engagement of the studs 66 and 69 with respective stripper blocks 38, 39, to drive the blocks rearwardly. It will be appreciated that due to the blocks 38, 39 being formed of a series of plates 71, 72 individually mounted on respective rods 37, the plates 71, 72 are moved by respective studs 66, distances determined by the stud settings in the blocks 65, 68. The rearward movement of the stripper blades effects stripping of insulation, and the setting of the studs 66 and of the collars 26 of the guide rods 37 determines the stripping length.

Further rearward movement of the carriage 4 engages studs 60 with the levers 57 to pivot the levers 57 clockwise, as seen in Figure 3, to trip the links 52 of the drive members 47 counterclockwise and thereby disengage the drive members 47 from cams 56. Closing force on the stripper support blocks 30, 31 is released and the blocks 30, 31 are urged apart by the biasing springs of the guide members 32, to open the stripper blades. By appropriate setting of the studs 60 in the carriage slots 27, the stripping length can be foreshortened, to obtain, if desired, partial stripping of insulation, i.e. a condition in which a length of wire core is exposed, but the end portion of insulation is not removed from the wire.

In the event partial stripping is not required, it will be understood that end portions of insulation are stripped completely from the wires, behind the shear blades. When the stripper blocks 38, 39 are closed together and moved rearwardly by studs 66, there is defined behind the blades 42, 43 a rectangular cavity in which the stripped insulation accumulates. The cavity aligns with the vacuum ducts 96, 97 for removal of the scrap.

On completion of the rearward stroke, the piston and cylinder device 7 is reversed to drive the carriage forward to its Figure 3 condition. The cams 22 disengage from the rollers 31 of drive rods 20 and the gripper blocks 38, 39 are biased apart by the springs of the guide members 23, to disengage the gripper from the wires. The wire straightening block 83 is then withdrawn upwards to the left, and the stripped wires 9 are withdrawn by lateral movement of the multiple wire carrier 8 to the left.

-15- 0136852

CLAIMS:

1. A multiple wire stripper comprising a frame (1) carrying a pair of opposed stripping blades (6) adapted to engage a plurality of wires (9) arranged in spaced parallel relation and to strip end portions of the wires (9) by relative movement between the stripper blades (6) and the wires (9) lengthwise of the wires (9), driving means (7, 32, 47) being adapted to move the blades (6) between open and closed conditions, characterized in that the stripper blades (6) are supported on respective stripper blocks (38, 39), the blocks (38, 39) being mounted on transverse guides (37) extending from respective stripper support blocks (30, 31), for movement of the stripper blocks (38, 39) towards and away from the stripper support blocks (30, 31), the support blocks (30, 31) being mounted in the frame (1) on guide means (32) for movement towards and away from each other to effect opening and closing of the stripper blocks (38, 39) and stripper blades (6), biasing means acting between the support blocks (30, 31) and the stripper blocks (38, 39) to bias the stripper blocks (38, 39) away from the support blocks (30, 31), a pair of wire gripper blocks (10, 11) being reciprocably mounted in the frame (1) adjacent the stripper blocks (38, 39) on a side opposite to the support blocks (30, 31) and adapted to clamp the plurality of wires (9) adjacent end portions to the stripped, the drive means (7, 15, 23, 32, 47) being arranged to move the gripper blocks (10, 11) and the stripper support blocks between open and closed conditions, a carriage (4) being mounted in the frame (1) for reciprocation transversely of the paths of movement of the gripper and support blocks (10, 11, 30, 31), and means (65, 66) on the carriage (4) being arranged to engage the stripper blocks (38, 39) on movement of the carriage (4) in one sense, to drive the stripper blocks (38, 39) against the biasing means on the transverse guides (37) towards the support blocks (30, 31) and away from the gripper blocks (10, 11) to effect a stripping action.

2. A multiple wire stripper as claimed in claim 1, characterized by wire locating means (3) mounted adjacent the gripper blocks (10, 11) on a side opposite to the stripper blades (6), and comprising a fixed lower support block (80) and a movable wire straightening block (83) reciprocably mounted for movement upwardly and away from the support block (80) at an acute angle in relation to the wire insertion direction, the wire straightening block (83) being formed at a lower leading portion with a plurality of spaced plate portions (82) slidably engageable in respective slots (81) formed in the support block (80), spaces between the plate portions (82) defining wire guide passages, the wire straightening block (83) being reciprocable between a condition in which the plate portions (82) are withdrawn from the slots (81) and a condition in which they penetrate the slots (81) and a leading side of the block (83) slidingly abuts a gripper block (10).

3. A multiple wire stripper as claimed in claim 1 or in claim 2, characterized in that driving means for the gripper blocks (10, 11) and for the stripper support blocks (30, 31) comprise respective drive rods (15, 47) engageable by cam means (22, 56) on the carriage (4) to drive rods (15, 47) downwardly, the rods (15, 47) being directly coupled to upper blocks (11, 30) and coupled to lower blocks (10, 31) through respective reversing linkages (18, 50) whereby the blocks (10, 11 & 30, 31) may be moved together.

4. A multiple wire stripper as claimed in claim 3, characterized in that biasing means (23, 32) are provided between the gripper blocks (10, 11) and between the stripper support blocks (30, 31) to bias the blocks apart to open conditions.

5. A multiple wire stripper as claimed in claim 4, characterized in that the drive rods (47) for the stripper support blocks (30, 31) engage the associated cam means (56) of the carriage (4) through respective links (52) pivoted on the drive rods (47) and biased to an operative condition, adjustable means (27, 60) on the carriage (4) being arranged on movement of the carriage (4) in a stripping direction, pivotally to move the links (52) to an inoperative condition, disengaging from the cam means (56) and allowing opening of the stripper support blocks (30, 31) by the associated biasing means (32).

6. A multiple wire stripper as claimed in claim 1, characterized in that the stripper blocks (38, 39) are each formed as a series of plate members (71, 72), each plate member (71, 72) carrying a respective adjustable stripper blade (6) and mounted on a respective transverse guide (37) extending from the associated stripper support block (30, 31), the plate members (71, 72) of each block (38, 39) being disposed in side-by-side sliding engagement whereby the plate members (71, 72) are independently movable towards and away from the associated support blocks (30, 31).

7. A multiple wire stripper as claimed in claim 6, characterized in that the transverse guides (37) comprise rods (37) secured to the plates (71, 72) and extending slidably through bores in the support blocks (30, 31) and carrying adjustable collars (26) at their ends on a side of the associated support block (30, 31) remote from the stripper blocks (38, 39), compression springs being mounted on the rods (37) between the support blocks (30, 31) and the plate members (71, 72) to bias the plate members (71, 72) away from the blocks (30, 31).

8. A multiple wire stripper as claimed in claim 7, characterized in that the means (65, 66) on the carriage (4) arranged to engage the stripper blocks (38, 39) comprise respective rows of studs (66) each stud being arranged to engage a respective plate member (71, 72) and being individually adjustable in the direction of carriage movement.

9. A multiple wire stripper as claimed in claim 7, characterized in that the plate members (71) of one stripper block (38) are coupled to respective plate members (72) of the other block (39) by sliding guides (40).

-18-　　　　　　　　　　0136852

10. A multiple wire stripper as claimed in claim 1, characterized in that the stripper blocks (38, 39) on a side of the stripper blades (6) remote from the gripper blocks (10, 11) are formed with recesses arranged on closure of the stripper blades (6) to define a generally rectangular cavity at a side of the blades (6) for receiving stripped insulation, the cavity being open at opposite ends of the blocks (38, 39) and arranged on movement of the stripper blocks (38, 39) towards the stripper support blocks (30, 31) to align with a vacuum duct (97) supported by the frame (1), for removal of stripped insulation.

11. Wire locating means suitable for use with a multiple wire stripper according to claim 1, comprising a lower support block (80) and a movable wire straightening block (83), characterized in that the wire straightening block (83) is reciprocably mounted in relation to the support block (80) for movement towards and away from the block (80) at an acute angle in relation to a wire insertion direction between the blocks (80, 83) the wire straightening block (83) being formed at a leading portion with a plurality of spaced plate portions (82) slidably engageable in respective slots (81) formed in the support block (80), spaces between the plate portions (82) defining wire guide passages, the wire straightening block (83) being reciprocable between a condition in which the plate portions (82) are withdrawn from the slots (81) and a condition in which they penetrate the slots (81).

FIG1.

FIG.1A.

FIG.2.

33
30
36
34
35
36
31
33

FIG.4.

93
86
84
89
90
92
91
94
83

FIG.3.

FIG.5.